# EUROPÄISCHE PATENTANMELDUNG

(11) **EP 3 174 010 A2**
(43) Veröffentlichungstag der Anmeldung: **31.05.2017**
(21) Anmeldenummer: 16001754.7
(22) Anmeldetag: 08.08.2016
(51) Int. Cl.: G06T 7/55

(54) **VERFAHREN ZUR ERSTELLUNG EINER 3D-REPRÄSENTATION UND KORRESPONDIERENDE BILDAUFNAHMEVORRICHTUNG**

(30) Priorität: 08.08.2015 DE 102015010264
(71) Anmelder: Testo AG, 79853 Lenzkirch (DE)
(72) Erfinder: Evers-Senne, Jan-Friso, 79288 Titisee-Neustadt (DE); Sasse, Philipp, 79859 Schluchsee (DE); Altendorf, Hellen, 79199 Kirchzarten (DE); Bartsch, Raphael, 88085 Langenargen (DE)
(74) Vertreter: Maucher Jenkins Patent- und Rechtsanwälte

(57) **Zusammenfassung**

Bei einem Verfahren zur Erstellung einer 3D-Repräsentation eines Aufnahmeobjekts wird vorgeschlagen, zu aufgenommenen Einzelbildern (2, 3) von einem Aufnahmeobjekt jeweils rechnergestützt mit einer Merkmalsdetektion Merkmalspixel (6, 7, 8, 9) zu identifizieren, zu diesen Merkmalspixeln (6, 7, 8, 9) aufgrund inhaltlicher Korrespondenzen jeweils 3D-Punkte (11, 12) und Kameraposen (3, 4) der Einzelbilder (2, 3) computerimplementiert zu berechnen, in die berechneten 3D-Punkte (11, 12) wenigstens ein geometrisches Primitiv (14) computerimplementiert einzupassen und in einer Plausibilitätsprüfung (15) zu prüfen, ob sich für das geometrische Primitiv (14) eine minimale Diskrepanz zwischen den Einzelbildern (2, 3) ergibt, und das geometrische Primitiv (14), für welches die Diskrepanz minimiert ist, auszugeben (Fig. 2).

## Beschreibung

Die Erfindung betrifft ein Verfahren zur Erstellung einer 3D-Repräsentation zu einem Aufnahmeobjekt.

Es sind Verfahren bekannt, bei denen Messdaten von einem Aufnahmeobjekt aufgenommen werden und diese in ein CAD-Programm manuell eingegeben werden, um auf diese Weise eine 3D-Repräsentation des Objektes zu erzeugen. Alternativ ist es bekannt, 3D-Messungen von dem Objekt aufzunehmen, die eine Vielzahl von Messpunkten enthalten, die ebenfalls manuell nachbearbeitet werden müssen.

Die Erfindung betrifft weiter eine Bildaufnahmevorrichtung.

Der Erfindung liegt die Aufgabe zugrunde, die Erstellung einer 3D-Reprästentation zu automatisieren, so dass manuelle Eingabeschritte möglichst verzichtbar sind.

Zur Lösung der genannten Aufgabe sind erfindungsgemäß bei einem Verfahren zur Erstellung einer 3D-Repräsentation die Merkmale des Anspruchs 1 vorgesehen. Insbesondere wird somit erfindungsgemäß zur Lösung der genannten Aufgabe bei einem Verfahren zur Erstellung einer 3D-Repräsentation zu einem Aufnahmeobjekt vorgeschlagen, dass in einem Aufnahmeschritt eine Folge von Einzelbildern des Aufnahmeobjektes aus jeweils einer Kamerapose aufgenommen wird, dass in einem Merkmalsdetektionsschritt eine Merkmalsdetektion auf die Einzelbilder rechnergestützt angewandt wird, um Bildpixel als Merkmalspixel zu identifizieren, dass in einem 3D-Berechnungsschritt zu den Merkmalspixeln die Kameraposen und jeweils 3D-Punkte rechnergestützt berechnet werden, dass in einem Einpassungsschritt für die 3D-Punkte der Merkmalspixel wenigstens ein geometrisches Primitiv rechnergestützt eingepasst wird, dass in einer Plausibilitätsprüfung das wenigstens eine geometrische Primitiv geprüft und/oder optimiert wird, ob oder bis eine Diskrepanz zwischen den Einzelbildern minimiert ist, und in einem Repräsentationsschritt das geometrische Primitiv zu der minimierten Diskrepanz ausgegeben wird. Durch die erfindungsgemäße Kombination einer an sich bekannten Berechnung von 3D-Punkten aus Merkmalspixeln in einer Folge von Einzelbildern mit einer automatischen Einpassung wenigstens eines geometrischen Primitivs in die berechneten 3D-Punkte ist es somit auf einfache Weise rechnergestützt möglich, für einen Benutzer eine 3D-Repräsentation selbst dann darzustellen, wenn nur wenige 3D-Punkte zur Verfügung stehen. Dies kann beispielsweise dann auftreten, wenn das Aufnahmeobjekt im Wesentlichen homogen ist und daher wenig markante Eigenschaften aufweist, die in einer Merkmalsdetektion identifizierbar sind. Beispielsweise kann dies bei der Aufnahme einer Zimmerwand, die einfarbig gestrichen oder beschichtet ist, der Fall sein. Durch die erfindungsgemäße anschließende Plausibilitätsprüfung ist es weiter möglich, Ungenauigkeiten oder Unzulänglichkeiten bei der Berechnung der 3D-Punkte durch eine Verbesserung oder Überprüfung auf Plausibilität der eingepassten geometrischen Primitive zu erreichen. Auch dies ist besonders vorteilhaft, wenn das Aufnahmeobjekt nur wenig Struktur aufweist. Die Berechnung der 3D-Punkte kann beispielsweise mit einem Structure-from-Motion-Verfahren oder durch Auflösen eines Gleichungssystems, welches die Merkmals-pixel als Abbilder des zugehörigen 3D-Punktes beschreibt, erfolgen.

Die Erfindung ermöglicht es somit, von einem Aufnahmeobjekt, beispielweise einem Gegenstand oder einem Raum, Bauwerk oder Gebäudeteil, auf einfache Weise eine vergleichsweise genaue 3D-Repräsentation zu erstellen, ohne dass ein umfangreicher manueller Eingriff in das Verfahren erforderlich ist.

Die Verwendung der geometrischen Primitive hat darüber hinaus den weiteren Vorteil, dass für einen Benutzer, beispielsweise einen Handwerker, eine vertraute Darstellung erzeugbar ist. Dies liegt daran, dass in von Menschen gebauten Objekten gerade Kanten, ebene Flächen und einfache geometrische Objekte wie etwa zylindrische Säulen dominieren. Besonders günstig ist es daher, wenn die verfügbaren geometrischen Primitive als begrenzter, parametrisierbarer Satz bereitgehalten und hinterlegt sind.

Mit der Erfindung ergibt sich somit eine Darstellung, die für den Benutzer einfach erfassbar ist. Während bei bereits bekannten Systemen zur automatischen Erfassung von Geometrie typischerweise beliebige Punktmengen oder Dreiecksnetze verarbeitet werden, die eine Darstellung beliebiger Oberflächenformen erlauben, ermöglicht die erfindungsgemäße Begrenzung auf geometrische Primitive, die in zuvor berechnete 3D-Punkte eingepasst werden, eine intuitive Auswertbarkeit des Berechnungsergebnisses. Auf diese Weise ist für den Benutzer außerdem eine Datenreduktion auf ein praktisch weiterverarbeitbares Maß erreichbar.

Bei einer Ausgestaltung der Erfindung kann vorgesehen sein, dass in der Plausibilitätsprüfung in einem Segmentierungsschritt die Einzelbilder rechnergestützt segmentiert werden. Automatische oder rechnergestützte Segmentierungsschritte sind hierbei an sich bekannt und mit Vorteil einsetzbar. Hierbei werden oft Initialzellen, sogenannte Seeds, verwendet, und es werden diejenigen Bildpixel eines Einzelbildes in ein Segment gefasst, die inhaltlich zu den Initialzellen korrespondieren und zueinander und zu der Initialzelle benachbart sind. Von Vorteil ist dabei, dass unterschiedliche Bildinhalte der Einzelbilder separat voneinander verarbeitbar sind. Dies ermöglicht beispielsweise eine getrennte Verarbeitung von unterschiedlichen Objekten in einem Einzelbild. Besonders günstig ist es, wenn die Merkmalspixel als Initialzellen verwendet werden. Somit kann erreicht werden, dass zusammenhängende Bildinhalte der Einzelbilder, die vermutlich zu einem erfindungsgemäß berechneten 3D-Punkt gehören, zu diesem 3D-Punkt zuordenbar sind.

Alternativ oder zusätzlich kann vorgesehen sein, dass in der Plausibilitätsprüfung in einem Variationsschritt Bildpixel eines Segments anhand der zugehörigen Kamerapose auf das wenigstens eine geometrische Primitiv rechnergestützt virtuell projiziert werden. Von Vorteil ist dabei, dass zusätzliche Bildinformationen aus den Einzelbildern den geometrischen Primitiven unter der Hypothese zugeordnet werden, dass diese Einzelheiten innerhalb eines Segments in der Aufnahme von dem geometrischen Primitiv oder dem Teil des Aufnahmeobjektes, welchen das geometrische Primitiv repräsentieren soll, stammen. Dies ermöglicht auf einfache Weise, die Plausibilität zu prüfen, mit welcher das versuchsweise eingepasste geometrische Primitiv akzeptierbar ist. Dies liegt daran, dass alle Einzelbilder während der Aufnahme das versuchsweise eingepasste geometrische Primitiv - in Abhängigkeit von der Kamerapose - hätten aufnehmen müssen, so dass eine Rückverfolgung der Strahlengänge bei der jeweiligen Aufnahme zu übereinstimmenden Bildwerten auf dem Aufnahmeobjekt führen sollte.

Besonders günstig ist es hierbei, wenn das wenigstens eine geometrische Primitiv rechnergestützt variiert wird, bis die Diskrepanz zwischen auf einen gemeinsamen Teilbereich des geometrischen Primitivs projizierten Bildpixeln unterschiedlicher Einzelbilder minimiert ist. Somit ist auf einfache Weise die optimale Ausgestaltung einer Annäherung an das Aufnahmeobjekt durch ein geometrisches Primitiv erreichbar, da sich eine Übereinstimmung zwischen dem versuchsweise eingepassten geometrischen Primitiv und dem tatsächlich aufgenommenen Aufnahmeobjekt nur unter der Bedingung ergeben kann, dass die in den Einzelbildern aufgenommenen Bildinformationen, die aufgrund der jeweiligen Kamerapose von demselben Teilbereich des Ausnahmeobjekts stammen sollen, übereinstimmen.

Beispielsweise kann vorgesehen sein, dass zur Bestimmung der Diskrepanz eine Differenz von Farb- und/oder Helligkeitswerten der Bildpixel berechnet und betragsmäßig aufsummiert wird. Somit ist auf einfache Weise erreichbar, dass dasjenige geometrische Primitiv als ein optimales geometrisches Primitiv akzeptiert wird, für welches inhaltlich zueinander aufgrund der Kameraposen und der Lage des geometrischen Primitivs korrespondierende Bildpixel unterschiedlicher Einzelbilder tatsächlich übereinstimmende Bildinhalte aufweisen. Somit ist ein gut handhabbares Kriterium gegeben, mit welchem eine optimale Einpassung eines geometrischen Primitivs in eine Menge von 3D-Punkten erreichbar ist.

Als geometrische Primitive sind beliebige geometrische Körper oder Teile von diesen verwendbar. Durch Verwendung regelmäßiger Körper ist eine Reduktion des Parameterraums erreichbar.

Bei einer Ausgestaltung der Erfindung kann vorgesehen sein, dass in dem Anpassungsschritt als geometrisches Primitiv ein Kegelmantelteil, ein Zylindermantelteil, und/oder ein Ebenenteil verwendet wird. Von Vorteil ist dabei, dass diese zwei geometrischen Grundformen die häufigsten geometrischen Grundformen bei künstlichen Objekten darstellen, so dass das erfindungsgemäße Verfahren mit Vorteil für die Berechnung einer 3D-Repräsentation von menschengemachten Gegenständen geeignet ist. Vorzugsweise ist/sind der Zylindermantelteil, der Kegelmantelteil und/oder der Ebenenteil berandet. Somit ergibt sich eine Begrenzung des jeweiligen geometrischen Primitivs auf einen Raumbereich. Hierdurch ist auf einfache Weise eine Einpassung in eine lokal begrenzte Menge von 3D-Punkten erreichbar. Besonders günstig ist es dabei, wenn der Zylindermantelteil, der Kegelmantelteil und/oder der Ebenenteil parametriert ist/sind. Auf diese Weise ist eine rechnergestützte, vollautomatische Optimierung in der beschriebenen Art besonders einfach realisierbar, da die Parameter als Variationsparameter verwendbar sind.

Bei einer Ausgestaltung der Erfindung kann vorgesehen sein, dass im Aufnahmeschritt ein Muster auf das Aufnahmeobjekt projiziert wird. Von Vorteil ist dabei, dass künstlich zusätzliche Merkmale auf dem Aufnahmeobjekt erzeugbar sind, die sich für die Berechnung von 3D-Punkten in dem erfindungsgemäßen Verfahren eignen. Die Zahl der 3D-Punkte ist somit vergrößerbar. Dies verbessert eine Genauigkeit einer Berechnung der 3D-Repräsentation.

Bei einer Ausgestaltung der Erfindung kann vorgesehen sein, dass im Einpassungsschritt ein RANSAC-Verfahren angewendet wird. Von Vorteil ist dabei, dass bekannte Verfahren zur Einpassung von geometrischen Primitiven verwendbar sind.

Bei einer Ausgestaltung der Erfindung kann vorgesehen sein, dass in einem Punktgenerierungsschritt zusätzliche 3D-Punkte in einer rechnergestützten dichten Rekonstruktion erzeugt werden. Von Vorteil ist dabei, dass die Zahl der 3D-Punkte vergrößerbar ist, wodurch die Genauigkeit einer Einpassung des geometrischen Primitivs nochmals steigerbar ist. Bevorzugt wird der Punktgenierungsschritt im Anschluss an den Merkmalsdetektionsschritt ausgeführt. Von Vorteil ist dabei, dass bereits vor dem Punktgenerierungsschritt erste 3D-Punkte in der beschriebenen Weise des erfindungsgemäßen Verfahrens bereitstellbar sind. Beispielsweise kann vorgesehen sein, dass die dichte Rekonstruktion mittels eines Stereo-Algorithmus und/oder einer Rektifizierung erfolgt. Bekannte Verfahren sind somit in dem erfindungsgemäßen Verfahren als Teilschritte nutzbar.

Bei einer Ausgestaltung der Erfindung kann vorgesehen sein, dass in einem Extrapolationschritt rechnergestützt einen Schnittmenge von Verlängerungen von wenigstens zwei jeweils eingepassten und/oder variierten geometrischen Primitiven berechnet wird. Von Vorteil ist dabei, dass Begrenzungen der geometrischen Primitive, die sich beispielsweise durch Lücken in der Menge der berechneten 3D-Punkte ungewollt ergeben, auf einfache Weise beseitigbar sind. Die Erfindung nutzt hierbei, dass menschengemachte Gegenstände und Objekte nicht nur typischerweise aus geometrischen Primitiven zusammengesetzt sind, sondern sogar äußerlich glatte Oberflächen ohne Sprünge, Lücken oder Versetzungen aufweisen. Somit stellt die beschriebene Extrapolation der eingepassten geometrischen Primitive eine brauchbare Annäherung an real aufgenommene Aufnahmeobjekte dar. Besonders günstig ist es, wenn der Verbindungsschritt im Anschluss an den Variationsschritt erfolgt. Somit kann automatisiert eine Visualisierung berechnet werden, mit der einfach ersichtlich ist, ob die unterschiedlichen eingepassten geometrischen Primitive zueinander passen.

Besonders günstig ist es hierbei oder bei einer weiteren Ausgestaltung, wenn in einem Verbindungsschritt die wenigstens zwei verlängerten geometrischen Primitive an einer, beispielsweise der bereits erwähnten Schnittmenge verbunden werden. Von Vorteil ist dabei, dass für die rechnergestützte Verarbeitung aus den unabhängig voneinander eingepassten geometrischen Primitiven ein gemeinsam weiterverarbeitbares Objekt oder Modell als 3D-Reprästentation des Aufnahmeobjektes bereitstellbar ist.

Bei einer Ausgestaltung der Erfindung kann vorgesehen sein, dass ein Schritt oder mehrere Schritte aus der Gruppe von Merkmalsdetektionsschritt, 3D-Berechnungsschritt, Einpassungsschritt, Plausibilitätsprüfung, Segmentierungsschritt, Variationsschritt, Extrapolationsschritt, Verbindungsschritt jeweils ausgeführt wird/werden, bis ein Endkriterium erfüllt ist. Von Vorteil ist dabei, dass eine Bearbeitungstiefe mit dem Endkriterium vorgebbar ist. Von Vorteil ist weiter, dass ein automatisch verarbeitbares Abbruchkriterium für die jeweiligen, schleifenartig ausgeführten Verfahrensschritte bereitstellbar ist. Besonders günstig ist es, wenn das jeweilige Endkriterium jeweils von einem Parameter abhängig ist. Von Vorteil ist dabei, dass das Endkriterium einfach variierbar ist, um beispielsweise unterschiedliche Rechengenauigkeiten und/oder unterschiedliche Rechenzeiten zu realisieren.

Bei einer Ausgestaltung der Erfindung kann vorgesehen sein, dass jeweils eine funktionelle Abhängigkeit der bereits genannten Parameter oder allgemein von Parametern von einem Master-Parameter vorgehalten wird. Von Vorteil ist dabei, dass eine Variation der Endkriterien durch Variation eines einzelnen Master-Parameters, welcher gemäß der funktionellen Abhängigkeit die einzelnen Parameter vorgibt, ermöglicht ist. Besonders günstig ist es dabei, wenn der Master-Parameter zu einer erneuten Ausführung eines Schrittes oder mehrerer Schritte der Gruppe von Merkmalsdetektionsschritt, 3D-Berechnungsschritt, Einpassungsschritt, Plausibilitätsprüfung, Segmentierungsschritt, Variationsschritt, Extrapolationsschritt, Verbindungsschritt verändert wird. Von Vorteil ist dabei, dass das erfindungsgemäße Verfahren mit unterschiedlichen Genauigkeiten und/oder Rechenzeiten ausführbar ist. Somit ist dem Anwender beispielsweise ein einfaches Mittel zur Hand gegeben, zu entscheiden, ob eine Erhöhung der Rechenzeit eine brauchbare Verbesserung der Genauigkeit ergibt oder nicht.

Bei einer Ausgestaltung der Erfindung kann vorgesehen sein, dass wenigstens zwei Schritte aus der Gruppe von Aufnahmeschritt, Merkmalsdetektionsschritt, 3D-Berechnungsschritt, Einpassungsschritt, Plausibilitätsprüfung, Segmentierungsschritt, Variationsschritt, Extrapolationsschritt, Verbindungsschritt zeitlich überlappend ausgeführt werden. Von Vorteil ist dabei, dass der Anwender - beispielsweise in Echtzeit - die Erzeugung einer 3D-Reprästentation mitverfolgen kann, während andere Teile des erfindungsgemäßen Verfahrens noch nicht abgeschlossen sind. Beispielsweise können der Aufnahmeschritt und der Merkmalserkennungsschritt zeitlich überlappend ausgeführt werden. Auf diese Weise ist es möglich, dass für bereits aufgenommene Einzelbilder ein Merkmalserkennungsschritt ausgeführt wird, während weitere Einzelbilder aufgenommen werden. Der Benutzer kann somit bereits während des Aufnahmeschritts an Stellen zusätzliche Aufnahmen vornehmen, an denen beispielsweise eine zu geringe Datendichte vorliegt.

Bei einer Ausgestaltung der Erfindung kann vorgesehen sein, dass im Einpassungsschritt und/oder im Variationsschritt zwei oder mehr als zwei geometrische Primitive verarbeitet werden. Somit sind komplexere Aufnahmeobjekte nachbildbar. Besonders günstig ist es dabei, wenn die geometrischen Primitive unabhängig voneinander und/oder zeitlich parallel zueinander verarbeitet werden. Dies ermöglicht eine parallelisierte Erstellung der 3D-Reprästentation, wodurch eine erforderliche Zeitspanne zur Erstellung der 3D-Repräsentation verkürzbar ist.

Zur Lösung der genannten Aufgabe sind erfindungsgemäß bei einer Bildaufnahmevorrichtung die Merkmale des nebengeordneten, auf eine Bildaufnahmevorrichtung gerichteten Anspruchs vorgesehen. Insbesondere wird somit bei einer Bildaufnahmevorrichtung zur Lösung der genannten Aufgabe erfindungsgemäß vorgeschlagen, die Bildaufnahmevorrichtung mit einem Bildsensor, der zu einer Aufnahme einer Folge von Einzelbildern eingerichtet ist, einem Merkmalsdetektor, der zu einer Anwendung einer Merkmaldetektion auf die Einzelbilder und zu einer Identifizierung von Bildpixeln als Merkmalspixel eingerichtet ist, einem 3D-Berechner, der zu einer Berechnung von 3D-Punkten zu den Merkmalspixel und den Kameraposen zu den Einzelbildern eingerichtet ist, einer Einpassungseinrichtung, die zu einer Einpassung wenigstens eines geometrischen Primitivs für die 3D-Punkte der Merkmalspixel eingerichtet ist, einer Plausibilitätseinrichtung, welche zu einer Prüfung und/oder Optimierung des wenigstens einen geometrischen Primitivs, bis anhand der Kameraposen gemeinsamen Teilbereichen des wenigstens einen geometrischen Primitivs zugeordnete Bildpixel und unterschiedlicher Einzelbilder eine minimierte Diskrepanz aufweisen, eingerichtet ist, und mit einer Ausgabeeinheit, die zu einer Ausgabe des wenigstens einen geometrischen Primitivs zu der minimierten Diskrepanz eingerichtet ist, auszurüsten. Somit ist eine Vorrichtung zur automatisierten, computerimplementierten Abarbeitung eines erfindungsgemäßen Verfahrens geschaffen.

Bei einer Ausgestaltung der Erfindung kann vorgesehen sein, dass die Plausibilitätseinrichtung aufweist: eine Segmentierungseinheit, die zu einer Segmentierung der Einzelbilder, vorbei die Merkmalspixel als Initialzellen (Seeds) vorgesehen sind und/oder verwendet werden, eingerichtet ist. Von Vorteil ist dabei, dass eine automatische Zerlegung von Einzelbildern in Bildinhalte, die berechneten 3D-Punkten entsprechen oder diesen inhaltlich zugeordnet sind, ausführbar ist. Zusätzlich oder alternativ kann vorgesehen sein, dass die Plausibilitätseinrichtung aufweist: eine Variationseinrichtung, die zu einer virtuellen Projektion von Bildpixeln eines Segments anhand der berechneten zugehörigen Kamerapose auf das wenigstens eine geometrische Primitiv eingerichtet ist. Von Vorteil ist dabei, dass der Abbildungsvorgang, welcher den Aufnahmen der Einzelbild zugrunde lag, für die Hypothese nachvollziehbar ist, dass das wenigstens eine geometrische Primitiv eine Näherung an das Aufnahmeobjekt oder eines Teils davon und somit eine 3D-Reprästentation des Aufnahmeobjekts oder eines Teils davon darstellen soll. Besonders günstig ist es dabei, wenn die Variationseinrichtung zusätzlich zu einer Variation des wenigstens einen geometrischen Primitivs, bis eine Diskrepanz auf einen gemeinsamen Teilbereich des geometrischen Primitivs projizierte Bildpixel minimiert ist, eingerichtet ist. Auf diese Weise ist eine automatische Verbesserung der 3D-Repräsentation erreichbar, bis die inhaltlichen Korrespondenz zwischen den Einzelbildern anhand der Hypothese der eingepassten geometrischen Primitive aus den berechneten Kameraposen als Resultat des Abbildungsvorgangs nachvollziehbar sind.

Besonders günstig ist es, wenn die erfindungsgemäße Bildaufnahmevorrichtung bei einem erfindungsgemäßen Verfahren, insbesondere wie zuvor beschrieben und/oder nach einem der auf ein Verfahren gerichteten Schutzansprüche, eingerichtet ist. Hierzu kann die Bildaufnahmevorrichtung Mittel zum Ausführen eines erfindungsgemäßen Verfahrens, insbesondere wie zuvor beschrieben und/oder einem der auf ein Verfahren gerichteten Ansprüche, aufweisen.

Die Erfindung wird nun anhand eines Ausführungsbeispiels näher beschrieben, ist jedoch nicht auf dieses Ausführungsbeispiel beschränkt.

Es zeigt in stark schematisierter Prinzipdarstellung zur Erläuterung der Erfindung:
- Fig. 1: einen Ablaufplan eines erfindungsgemäßen Verfahrens und
- Fig. 2: die virtuelle Rekonstruktion einer 3D-Repräentation.

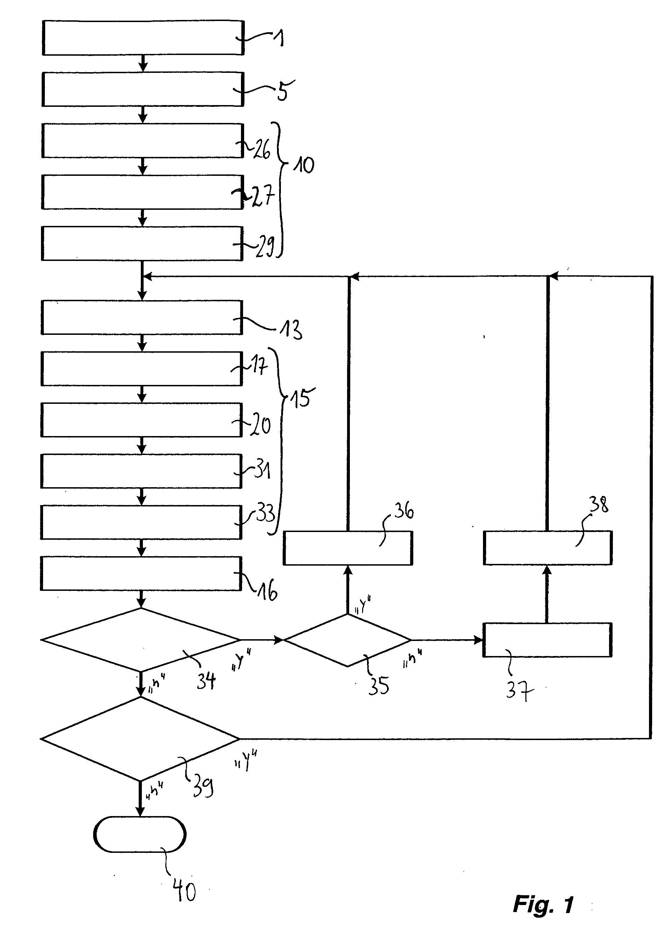

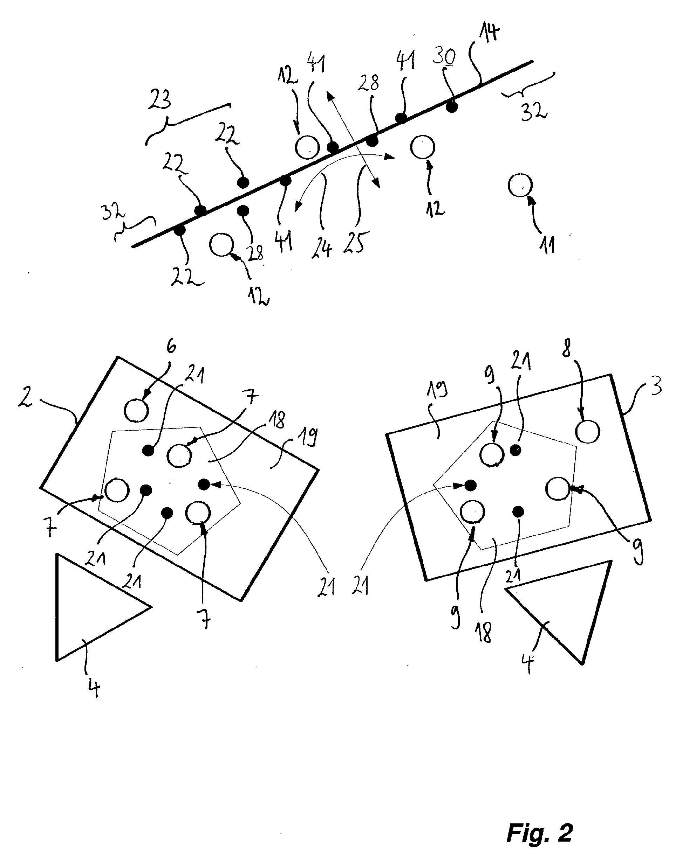

Die Figuren 1 und 2 werden im Folgenden gemeinsam beschrieben.

Bei dem erfindungsgemäßen Verfahren zur Erstellung einer 3D-Repräsentation zu einem Aufnahmeobjekt wird zunächst in einem Aufnahmeschritt 1 eine Folge von Einzelbildern 2, 3 aufgenommen. Die Aufnahme erfolgt mit einer nicht weiter dargestellten, an sich bekannten Kamera, die zwischen den Aufnahmen der Einzelbilder 2, 3 bewegt werden kann, so dass die Einzelbilder 2, 3 jeweils aus einer individuellen Kamerapose 4, 5 erfasst wurden. Zur Erläuterung der Erfindung sind hier nur beispielhaft zwei Einzelbilder 2, 3 gezeigt; bei einer tatsächlichen Realisierung des Verfahrens wird eine Vielzahl von Einzelbildern 2, 3 aufgenommen, die deutlich größer als zwei ist.

In einem sich an die Aufnahmen anschließenden Merkmalsdetektionsschritt 5 wird in einem Merkmalsdetektor eine Merkmalsdetektion auf die Einzelbilder 2, 3 computerimplementiert angewandt. Im Ergebnis sind einzelne Bildpixel der Einzelbilder 2, 3 als Merkmalspixel 6, 7, 8, 9 identifiziert und zur Weiterverarbeitung bereitgestellt. Ist die Identifizierung der Merkmalspixel 6, 7, 8, 9 in den Einzelbildern 2, 3 abgeschlossen, so berechnet ein 3D-Berechner computergestützt in einem 3D-Berechnungsschritt 10 zu den Merkmalspixel 6, 7, 8, 9 aufgrund von inhaltlichen Korrespondenzen jeweils einen 3D-Punkt 11, 12. Hierbei sei der Einfachheit halber angenommen, dass die Merkmalspixel 6, 8 einen 3D-Punkt 11 und die Merkmalspixel 7, 9 jeweils einen 3D-Punkt 12 ergeben. Die 3D-Punkte 11, 12 liegen nun als dreidimensionale Positionsangaben vor.

Die Anzahl der identifizierten Merkmalspixel 6, 7, 8, 9 und der berechneten 3D-Punkte 11, 12 ist hier zur Vereinfachung der Erläuterung jeweils sehr klein gewählt; in tatsächlichen erfindungsgemäßen Verfahren ist die Zahl der Merkmalspixel 6, 7, 8, 9 deutlich größer als hier gezeigt, so dass auch die Zahl der berechneten 3D-Punkte 11, 12 deutlich größer ist.

In dem 3D-Berechnungsschritt 10 werden außerdem die Kameraposen 4 zu den Einzelbildern 2, 3 berechnet.

Nach Berechnung der 3D-Punkte 11, 12 wird in einem Einpassungsschritt 13 an die berechneten 3D-Punkte 11, 12 der identifizierten Merkmalspixel 6, 7, 8, 9 ein geometrisches Primitiv 14 eingepasst. In Figur 2 ist ersichtlich, dass diese Einpassung für den 3D-Punkt 11 nicht gelingt, so dass dieser 3D-Punkt 11 ein Ausreißer ist.

In Figur 2 ist das geometrische Primitiv 14 beispielhaft als Ebenenteil dargestellt. Es sind beispielsweise auch Kegelmantelteile oder auch Zylindermantelteile, als geometrisches Primitiv 14 verwendbar. Hier können Parameter beispielsweise durch einen Öffnungswinkel (der im Fall eines Zylinders verschwindet), eine Höhe, einen Radius an der Grundseite, einen Ausschnittswinkel oder allgemein durch an sich bekannte Parametrierungen eines Kegelmantelteils gegeben sein.

Der Einpassungsschritt 13 wird computergestützt mit einer Einpassungseinrichtung vollautomatisch ausgeführt. Es sei noch erwähnt, dass in dem Einpassungsschritt 13 ein RANSAC-Verfahren (random sample consensus-Verfahren) zum Einpassen und zur Auswahl eines passenden geometrischen Primitivs 14 verwendet wird.

In einer Plausibilitätseinrichtung wird nun eine Plausibilitätsprüfung 15 geprüft, ob das geometrische Primitiv 14 mit ausreichender Wahrscheinlichkeit eine 3D-Repräsentation des Aufnahmeobjektes darstellt. In noch genauer zu beschreibender Weise wird hierbei das geometrische Primitiv 14 optimiert, bis die Einzelbilder 2, 3 für die Hypothese, dass das geometrische Primitiv 14 eine 3D-Repräsentation des Aufnahmeobjekts darstellt, möglichst minimale Diskrepanzen untereinander aufweisen.

In einem Repräsentationsschritt 16 wird das optimierte geometrische Primitiv 14 an einer Ausgabeeinheit ausgegeben.

Hierbei wird in der Plausibilitätsprüfung 15 zunächst jedes Einzelbild 2, 3 in einem Segmentierungsschritt 17 mit einer Segmentierungseinrichtung in Segmente 18, 19 segmentiert. Hierbei werden die Merkmalspixel 6, 7, 8, 9 als Initialzellen, auch Seeds genannt, verwendet.

Figur 2 zeigt beispielhaft, dass die Merkmalspixel 7 beziehungsweise 9 auf diese Weise zu einem Segment 18 führen, während die Merkmalspixel 6, 8 zu einem Segment 19 führen.

Nun werden in einem Variationsschritt 20 anhand der berechneten Kameraposen 4 die Merkmalspixel 6, 7, 8, 9 sowie weitere Bildpixel 21 mit einer Variationseinrichtung rechnergestützt virtuell auf das geometrische Primitiv 14 projiziert.

Für die Merkmalspunkte 7, 9 ergeben sich so die 3D-Punkte 12, während für die weiteren Bildpunkte 21 des jeweiligen Segments 18, das als zu dem geometrischen Primitv 14 zugehörig erkannt ist, weitere 3D-Punkte 22 an den Schnittpunkten der Projektionsstrahlen durch die weiteren Bildpunkte 21 mit dem geometrischen Primitiv 14 entstehen. Auf diese Weise ergeben sich weitere 3D-Punkte 22, die auf dem geometrischen Primitiv 14 nah beieinander liegen, und es ergeben sich weitere 3D-Punkte 4, die weiter voneinander entfernt sind.

Diejenigen 3D-Punkte 22 die auf dem geometrischen Primitiv 14 nah beieinander liegen und somit einen gemeinsamen Teilbereich 23 des geometrischen Primitivs 14 zuordnet sind sollten ähnliche Bildinhalte wie Helligkeit und Farbwerte aufweisen.

In dem Variationsschritt 20 werden nun Parameter des geometrischen Primitivs 14, die beispielsweise dessen Lage im Raum, dessen Größe und/oder dessen Ausrichtung beschreiben, verändert, wie dies durch Pfeile 24, 25 beispielhaft illustriert ist.

Der Variationsschritt 20 wird solange ausgeführt und schleifenartig wiederholt, bis sich ein optimales geometrisches Primitiv 14 ergibt, für welches die inhaltliche Diskrepanz zwischen den projizierten Bildpixeln 21, also den weiteren 3D-Punkten 22 in dem Teilbereich 23 minimal einstellt.

Zur Berechnung dieses Minimums werden die Differenzen der Farb- und/oder Helligkeitswerte der projizierten Bildpixel 21 betragsmäßig aufsummiert.

Die Berechnung der 3D-Punkte 11, 12 in dem 3D-Berechnungsschritt 10 kann beispielsweise mit einem an sich bekannten Structure-from-Motion-Verfahren 26 erfolgen. Zur Unterstützung dieses 3D-Berechnungsschrittes 10 kann in dem Aufnahmeschritt 1 zusätzlich ein beispielsweise farbiges Muster auf das Aufnahmeobjekt optisch projiziert werden. Hierdurch ergeben sich zusätzliche Merkmale in den Einzelbildern 2, 3, die in einem ersten Punktgenerierungsschritt 27 in zusätzlich 3D-Punkte 28 resultieren. Diese 3D-Punkte 28 werden bei der Einpassung des geometrischen Primitivs 14 in dem Einpassungsschritt 13 ebenfalls verwendet.

In einem zweiten Punktgenerierungsschritt 29 werden mittels eines Stereo-Algorithmus und einer Rektifizierung weitere zusätzliche 3D-Punkte 30 erzeugt, die ebenfalls im Einpassungsschritt 13 zur Auswahl des geometrischen Primitivs 14 verwendet werden.

Im Rahmen der Plausibilitätsprüfung 15 wird im Anschluss an den Variationsschritt 20 in einem Extrapolationsschritt 31 zu jedem optimierten geometrischen Primitiv 14 eine Extrapolation oder Verlängerung 32 berechnet, die so lang gewählt ist, dass sich eine Schnittmenge mit einem benachbarten geometrischen Primitiv ergibt. Die beiden geometrischen Primitive 14, die eine Schnittmenge aufweisen, werden anschließend in einem Verbindungsschritt 33 miteinander verbunden.

Die bisher beschriebenen Schritte werden jeweils ausgeführt, bis ein Abbruchkriterium für eine gewünschte Rechengenauigkeit und Plausibilitätswahrscheinlichkeit erfüllt ist. Diese Kriterien sind jeweils für jeden einzelnen Berechnungsschritt individuell festgelegt.

Die Parameter, welche die jeweiligen Endkriterien beschreiben, sind funktionell abhängig von einem Master-Parameter hinterlegt.

In einem Abfrageschritt 34 wird der Benutzer gefragt, ob dieser Master-Parameter verändert werden soll. Ist dies der Fall (Alternative "y"), so wird in einem weiteren Abfrageschritt 35 gefragt, ob diese Änderung der Parameter für die gesamte Datenmenge und somit alle vollständigen Einzelbilder 2, 3 gelten soll (Alternative "y"), oder ob der geänderte Master-Parameter für eine ausgewählte Region gelten soll (Alternative "n").

Falls der zu ändernde Master-Parameter für die gesamte Datenmenge gelten soll, wird der Master-Parameter in einem Veränderungsschritt 36 wie gewünscht verändert, und das Programm springt vor den Einpassungsschritt 13, um den Einpassungsschritt 13 und die Plausibilitätsprüfung 15 sowie den Repräsentationsschritt 16 erneut auszuführen.

Soll der Master-Parameter nicht global für den gesamten Datensatz verändert werden (Alternative "n"), so wird zunächst in einem Auswahlschritt 37 eine Region der Daten der Einzelbilder 2, 3 ausgewählt, für welche der Master-Parameter verändert werden soll. Dies kann durch manuelle Eingabe oder durch automatisierten, computergestützten Vorschlag oder durch eine Kombination dieser Alternativen erfolgen.

Anschließend wird in einem Veränderungsschritt 38 der Master-Parameter für die ausgewählte Region verändert, und das Programm springt wieder vor den Einpassungsschritt 13.

Ist in dem Abfrageschritt 34 die Antwort dergestalt, dass keine Veränderung des Master-Parameters erfolgen soll (Alternative "n"), wo wird in einem weiteren Abfrageschritt 39 abgefragt, ob einzelne geometrische Primitive, Flächensegmente oder Dreiecksflächen manuell zusammengefasst werden sollen.

Ist dies der Fall (Alternative "y"), so wird das Programm ab dem Einpassungsschritt 13 mit diesem manuell zusammengefasste Flächensegmenten oder Dreiecksflächen erneut ausgeführt.

Soll dagegen keine manuelle Zusammenfassung ausgeführt werden (Alternative "n" zum Abfrageschritt 39), so wird das Programm im Schritt 40 beendet.

Der Einfachheit halber wurden zur Erläuterung von Figur 1 die einzelnen Schritte so dargestellt und erläutert, dass sie zeitlich nacheinander folgend ausgeführt werden. Bei weiteren Ausführungsbeispielen können einzelne Schritte, beispielsweise der Aufnahmeschritt 1 und der Merkmalserkennungsschritt 5, zeitlich überlappend und alternierend nacheinander ausgeführt werden, um dem Benutzer beispielsweise eine direkte Rückmeldung über die Notwendigkeit, weitere Einzelbilder 2, 3 aufzunehmen, geben zu können.

Bei dem Verfahren zur Erstellung einer 3D-Repräsentation eines Aufnahmeobjekts wird vorgeschlagen, zu aufgenommenen Einzelbildern 2, 3 von einem Aufnahmeobjekt jeweils rechnergestützt mit einer Merkmalsdetektion Merkmalspixel 6, 7, 8, 9 zu identifizieren, zu diesen Merkmalspixeln 6, 7, 8, 9 aufgrund inhaltlicher Korrespondenzen jeweils 3D-Punkte 11, 12 und Kameraposen 4 der Einzelbilder 2, 3 computerimplementiert zu berechnen, in die berechneten 3D-Punkte 11, 12 wenigstens ein geometrisches Primitiv 14 computerimplementiert einzupassen und in einer Plausibilitätsprüfung 15 zu prüfen, ob sich für das geometrische Primitiv 14 eine minimale Diskrepanz zwischen den Einzelbildern 2, 3 ergibt, und das geometrische Primitiv 14, für welches die Diskrepanz minimiert ist, auszugeben.

### Bezugszeichenliste

- 1: Aufnahmeschritt
- 2, 3: Einzelbild
- 4: Kamerapose
- 5: Merkmalsdetektionsschritt
- 6, 7, 8, 9: Merkmalspixel
- 10: 3D-Berechnungsschritt
- 11, 12: 3D-Punkt
- 13: Einpassungsschritt
- 14: geometrisches Primitiv
- 15: Plausibilitätsprüfung
- 16: Repräsentationsschritt
- 17: Segmentierungsschritt
- 18, 19: Segment
- 20: Variationsschritt
- 21: weiteres Bildpixel
- 22: weiterer 3D-Punkt
- 23: Teilbereich
- 24, 25: Pfeil
- 26: Structure-from-Motion-Verfahren
- 27: erster Punktgenerierungsschritt
- 28: 3D-Punkt
- 29: zweiter Punktgenerierungsschritt
- 30: weiterer zusätzlicher 3D-Punkt
- 31: Extrapolationsschritt
- 32: Verlängerung
- 33: Verbindungsschritt
- 34, 35: Abfrageschritt
- 36: Veränderungsschritt
- 37: Auswahlschritt
- 38: Veränderungsschritt
- 39: Abfrageschritt
- 40: Endschritt
- 41: weiterer 3D-Punkt

## Patentansprüche

1. Verfahren zur Erstellung einer 3D-Repräsentation zu einem Aufnahmeobjekt, wobei
- in einem Aufnahmeschritt (1) eine Folge von Einzelbildern (2, 3) des Aufnahmeobjektes aus jeweils einer Kamerapose (4) aufgenommen wird,
- in einem Merkmalsdetektionsschritt (5) eine Merkmalsdetektion auf die Einzelbilder (2, 3) rechnergestützt angewandt wird, um Bildpixel als Merkmalspixel (6, 7, 8, 9) zu identifizieren,
- in einem 3D-Berechnungsschritt (10) zu den Merkmalspixeln (6, 7, 8, 9) die Kameraposen (4) und jeweils 3D-Punkte (11, 12) rechnergestützt berechnet werden,
- in einem Einpassungsschritt (13) für die 3D-Punkte (11, 12) der Merkmalspixel (6, 7, 8, 9) wenigstens ein geometrisches Primitiv (14) rechnergestützt eingepasst wird,
- in einer Plausibilitätsprüfung (15) das wenigstens eine geometrische Primitiv (14) geprüft und/oder optimiert wird, ob oder bis eine Diskrepanz zwischen den Einzelbildern (2, 3) bestimmt ist, und
- in einem Repräsentationsschritt (16) das geometrische Primitiv (14) zu der minimierten Diskrepanz ausgegeben wird.

2. Verfahren nach Anspruch 1, **dadurch gekennzeichnet, dass** in der Plausibilitätsprüfung (15)
- in einem Segmentierungsschritt (17) die Einzelbilder (2, 3) rechnergestützt segmentiert werden, insbesondere wobei die Merkmalspixel (6, 7, 8, 9) als Initialzellen (Seeds) verwendet werden, und/oder
- in einem Variationsschritt (20) Bildpixel (21) eines Segments (18, 19) anhand der zugehörigen Kamerapose (4) auf das wenigstens eine geometrische Primitiv (14) rechnergestützt virtuell projiziert werden, insbesondere wobei das wenigstens eine geometrische Primitiv (14) rechnergestützt variiert wird, bis die Diskrepanz zwischen auf einen gemeinsamen Teilbereich (23) des geometrischen Primitivs (14) projizierten Bildpixeln (21) unterschiedlicher Einzelbilder (2, 3) minimiert ist.

3. Verfahren nach Anspruch 1 oder 2, **dadurch gekennzeichnet, dass** zur Bestimmung der Diskrepanz eine Differenz von Farb- und/oder Helligkeitswerten der Bildpixel (21) berechnet und betragsmäßig aufsummiert wird.

4. Verfahren nach einem der Ansprüche 1 bis 3, **dadurch gekennzeichnet, dass** in dem Einpassungsschritt (13) als geometrisches Primitiv (14) ein vorzugsweise parametrierter und/oder berandeter Kegelmantelteil, Zylindermantelteil, und/oder Ebenenteil verwendet wird.

5. Verfahren nach einem der Ansprüche 1 bis 4, **dadurch gekennzeichnet, dass** im Aufnahmeschritt (1) ein Muster auf das Aufnahmeobjekt projiziert wird.

6. Verfahren nach einem der Ansprüche 1 bis 5, **dadurch gekennzeichnet, dass** im Einpassungsschritt (13) ein RANSAC-Verfahren angewendet wird.

7. Verfahren nach einem der Ansprüche 1 bis 6, **dadurch gekennzeichnet, dass** vorzugsweise im Anschluss an den Merkmalsdetektionsschritt (5) in einem Punktgenerierungsschritt (27, 29) zusätzliche 3D-Punkte (28, 30) in einer rechnergestützten dichten Rekonstruktion, insbesondere mittels einem Stereo-Algorithmus und/oder einer Rektifizierung, erzeugt werden.

8. Verfahren nach einem der Ansprüche 1 bis 7, **dadurch gekennzeichnet, dass**, vorzugsweise im Anschluss an den Variationsschritt (20), in einem Extrapolationsschritt (31) rechnergestützt eine Schnittmenge von Verlängerungen von wenigstens zwei jeweils eingepassten und/oder variierten geometrischen Primitiven (14) berechnet wird und/oder in einem Verbindungsschritt (33) die wenigstens zwei verlängerten geometrischen Primitive (14) an der oder einer Schnittmenge verbunden werden.

9. Verfahren nach einem der Ansprüche 1 bis 8, **dadurch gekennzeichnet, dass** ein Schritt oder mehrere Schritte aus der Gruppe von Merkmalsdetektionsschritt (5), 3D-Berechnungsschritt (10), Einpassungsschritt (13), Plausibilitätsprüfung (15), Segmentierungsschritt (17), Variationsschritt (20), Extrapolationsschritt (31), Verbindungsschritt (33) jeweils ausgeführt werden, bis ein vorzugsweise von einem Parameter abhängiges Endkriterium erfüllt ist.

10. Verfahren nach einem der Ansprüche 1 bis 9, **dadurch gekennzeichnet, dass** jeweils eine funktionelle Abhängigkeit der Parameter von einem Master-Parameter vorgehalten wird, insbesondere wobei der Master-Parameter zu einer erneuten Ausführung eines Schritt oder mehrerer Schritte der Gruppe von Merkmalsdetektionsschritt (5), 3D-Berechnungsschritt (10), Einpassungsschritt (13), Plausibilitätsprüfung (15), Segmentierungsschritt (17), Variationsschritt (20), Verbindungsschritt (33), Extrapolationsschritt (31) verändert wird.

11. Verfahren nach einem der Ansprüche 1 bis 10, **dadurch gekennzeichnet, dass** wenigstens zwei Schritte aus der Gruppe von Aufnahmeschritt (1), Merkmalsdetektionsschritt (5), 3D-Berechnungsschritt (10), Einpassungsschritt (13), Plausibilitätsprüfung (15), Segmentierungsschritt (17), Variationsschritt (20), Extrapolationsschritt (31), Verbindungsschritt (33), insbesondere der Aufnahmeschritt (9) und der Merkmalserkennungsschritt (5), zeitlich überlappend ausgeführt werden.

12. Verfahren nach einem der Ansprüche 1 bis 11, **dadurch gekennzeichnet, dass** im Einpassungsschritt (13) und/oder im Variationsschritt (20) zwei oder mehr als zwei geometrische Primitive (14), vorzugsweise unabhängig voneinander und/oder parallel zueinander, verarbeitet werden.

13. Bildaufnahmevorrichtung, mit einem Bildsensor, der zu einer Aufnahme einer Folge von Einzelbildern (2, 3) eingerichtet ist, einem Merkmaldetektor, der zu einer Anwendung einer Merkmaldetektion auf die Einzelbilder (2, 3) und zu einer Identifizierung von Bildpixeln als Merkmalspixel (6, 7, 8, 9) eingerichtet ist, einem 3D-Berechner, der zu einer Berechnung von 3D-Punkten (11, 12) zu den Merkmalspixeln (6, 7, 8, 9) und den Kameraposen (4) zu den Einzelbildern (2, 3) eingerichtet ist, einer Einpassungseinrichtung, die zu einer Einpassung wenigstens eines geometrischen Primitivs (14) für die 3D-Punkte (11, 12) der Merkmalspixel (6, 7, 8, 9) eingerichtet ist, einer Plausibilitätseinrichtung, welche zu einer Prüfung und/oder Optimierung des wenigstens einen geometrischen Primitivs (14), bis anhand der Kameraposen (4) gemeinsamen Teilbereichen (23) des wenigstens einen geometrischen Primitivs (14) zugeordnete Bildpixel unterschiedlicher Einzelbilder (2, 3) eine minimierte Diskrepanz aufweisen, eingerichtet ist, und mit einer Ausgabeeinheit, die zu einer Ausgabe des wenigstens einen geometrischen Primitivs (14) zu der minimierten Diskrepanz eingerichtet ist.

14. Bildaufnahmevorrichtung nach Anspruch 13, **dadurch gekennzeichnet, dass** die Plausibilitätseinrichtung aufweist: eine Segmentierungseinrichtung, die zu einer Segmentierung der Einzelbilder (2, 3), wobei die Merkmalspixel (6, 7, 8, 9) als Initialzellen (Seeds) vorgesehen sind und/oder verwendet werden, eingerichtet ist, und/oder eine Variationseinrichtung, die zu einer virtuellen Projektion von Bildpixeln (21) eines Segments (18, 19) anhand der berechneten zugehörigen Kamerapose (4) auf das wenigstens eine geometrische Primitiv (14) und/oder zu einer Variation des wenigstens einen geometrischen Primitivs (14), bis eine Diskrepanz zwischen auf einen gemeinsamen Teilbereich (23) des geometrischen Primitivs (14) projizierten Bildpixeln (21) minimiert ist, eingerichtet ist.

15. Bildaufnahmevorrichtung nach dem vorangehenden Anspruch, **dadurch gekennzeichnet, dass** Mittel zum Ausführen eines Verfahrens nach einem der Ansprüche 1 bis 12 ausgebildet und/oder eingerichtet sind.
